Europäisches Patentamt

European Patent Office

Office européen des brevets

(11) Publication number: **0 236 515**
**A1**

## (12) EUROPEAN PATENT APPLICATION

(21) Application number: **86102882.7**

(22) Date of filing: **05.03.86**

(51) Int. Cl.⁴: **A23G 3/00** , A23G 3/20 , A21D 13/00

(43) Date of publication of application:
**16.09.87 Bulletin 87/38**

(84) Designated Contracting States:
**DE FR GB IT**

(71) Applicant: **Kabushiki Kaisha Bandai**
**5-4, 2-chome, Komagata**
**Taito-ku Tokyo(JP)**

(72) Inventor: **Hayami, Rie c/o K. K. Bandai**
**No. 5-4, 2-Chome Komagata**
**Taito-ku Tokyo(JP)**

(74) Representative: **Wey, Hans-Heinrich, Dipl.-Ing.**
**et al**
**Patentanwälte Müller-Börner Wey & Körner**
**Widenmayerstrasse 49**
**D-8000 München 22(DE)**

(54) **Assembly set for confectionery model.**

(57) An assembly set for making a model using confectionery members includes a plurality of confectionery members (2) such as a wafer used for assembling a model simulating such as a house or a vehicle; and granular sugar (5) for bonding the confectionery members together.

FIG.1

## ASSEMBLY SET FOR CONFECTIONERY MODEL

The present invention relates to an assembly set for making a model such as a house using confectionery members such as wafers.

In making a model such as a decorative house using confectionery members such as wafers, fresh cream has been used as an adhesive agent for coupling each confectionery member. Fresh cream as an adhesive for coupling each confectionery member, however, takes a fairly long time to become hard. Therefore, during such a long time the confectionery member is likely to absorb water thereby causing a deformation of the model to be made. Further, another problem is that the bonding strength is weak so that it is difficult to assemble the model with ease.

Therefore, it is an object of the present invention to provide an assembly set for making a model using a confectionery member, which can solve above problems and can bond the confectionery members together in relatively short time and with a large adhesive force.

According to one aspect of the present invention, the assembly set for making a model using confectionery members: comprises a plurality of confectionery members such as a wafer used for assembling a model simulating such as a house or a vehicle; and granular sugar for bonding said confectionery members together.

The above and other objects, features of the present invention will become apparent from the following detailed description by referring to the accompanying drawings, wherein

Fig.1 is a perspective view showing an embodiment of the assembly set for a model using confectionery members according to the present invention;

Fig.2 shows a template and a confectionery member, which illustrates one example of how a constituent element is formed from a united confectionery member; and

Fig.3 is a perspective view how a model is assembled.

An embodiment of the assembly set according to the present invention will now be described with reference to the accompanying drawings.

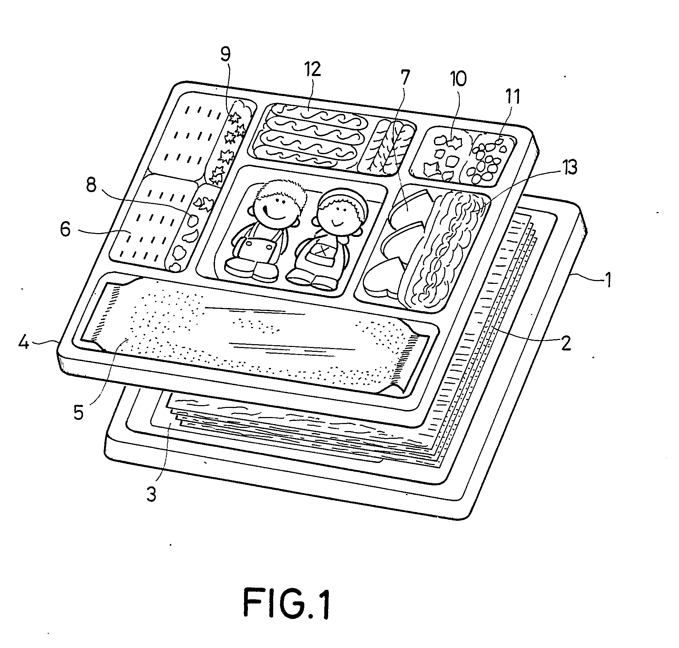

Referring to Figs.1 to 3, an example of an assembly set for making a house using confectionery members is shown. In a package made of vacuum moulding or the like, confectionery members 2 made of wafers and a template 3 are housed. The template 3 is depicted with the shapes of constituent elements by which a predetermined model is completed. In a package 4 divided into a plurality of concavities, housed are granular sugar 5 put into a bag for use as an adhesive agent for bonding the constituent elements together, and other confectionery members for use as a decorative part of the house also put into a bag; such as cubic biscuits 6, heart biscuits 7, colored gums 8, confetto 9, various shaped soda biscuits, colored mints 11, large and small stick candies 12, stick biscuits 13 and so on.

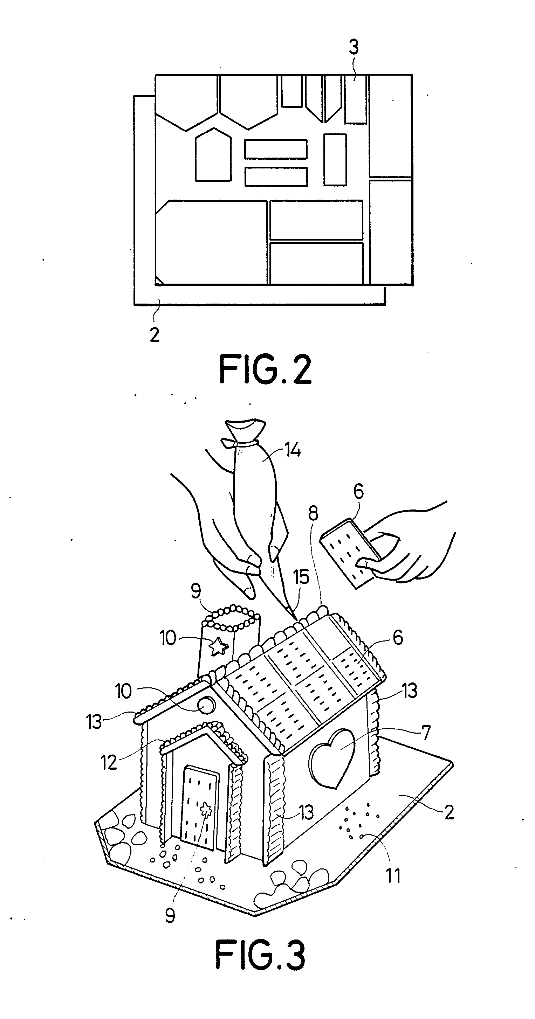

The procedure for assembling the model from the assembly set constructed as above will be described. First, each constituent element of the model is cut from the confectionery member 2 made of wafers. That is, each wafer is placed on the template 3 and is cut along the lines of constituent element shapes depicted on the template 3 to to form the constituent elements. Next, granular sugar is poured into a cup, and a proper or predetermined amount of water is mixed thereto to make the former into a paste-like material, which is stored in a squeeze bag 14 with a nozzle 15. as shown in Fig.3. The constituent elements are bonded together using granular sugar which is squeezed out from the bag 14. The main frame of the house is thus constructed from wafer confectionery members 2. Furthermore, on the outer surface of the main frame of the house, various confectionery members are bonded using granular sugar. That is, on the roof of the house, confectionery members are bonded such as biscuits 6, colored gums 8, confetto 9, soda biscuits 10 and so on. On the side walls of the house, confectionery members are bonded such as biscuits 6 and 7, confetto 9, soda biscuits 10, candies 12 and so on. On other desired positions, confectionery members are bonded such as colored mints 11 and so on.

The granular sugar has a superior nature of dissolving into water at a low temperature and in a short time. The way to use it is simple. Particularly, the adhesive force between particles is very high due to formation of fine crystals upon evaporation of water. Thus, quick drying and high adhesive power are obtained when compared with fresh cream.

As seen from the foregoing description, the assembly set for making a desired model using confectionery members such as wafers, has a paste-like granular sugar as the adhesive agent for bonding constituents elements together. Granular sugar has a superior nature of dissolving into water at a low temperature and in a short time. Particularly, the adhesive force between particles is very high due to formation of fine crystals upon water evaporation. Furthermore, as compared with prior art fresh cream, the handling of granular sugar is very simple. and quick drying and very high adhesive force are obtained. Thus, water absorption by the constituent elements is small, thus avoiding a deformation of the model during assembling. Particularly, it is very easy to assemble because of a high adhesive force of granular sugar.

Instead of the template 3, the shapes of constituent elements may be directly printed on the confectionery member 2 made of wafers, using edible coloring agent. A series of pin holes or crevices may be formed on the printed lines for simplifying cutting operation of the constituent elements from the confectionery member.

The main frame of the house has been formed by bonding the wafers in the above embodiment. However, the main frame of the house may be one which is already completed as an integral form. In this case, various ornamental confectionery members only are bonded with granular sugar.

Other embodiments of the invention will be apparent to those skilled in the art from a consideration of this specification or practice of the invention disclosed herein. It is intended that the embodiments be considered as exemplary only.

## Claims

An assembly set for making a model simulating such as a house or a vehicle comprising: a plurality of confectionery members such as wafers, biscuits, soda biscuits and candies, by which members the model is constituted; and granular sugar for bonding said plurality of confectionery members together.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 703 900 (HACK HARALD)<br>* Page 4, paragraph 4 - page 5, paragraph 1; figures 1,2; page 5, paragraph 2; page 7, paragraph 1; page 8, paragraphs 3,4; page 9, paragraph 2; page 11, paragraph 3 * | 1 | A 23 G 3/00<br>A 23 G 3/20<br>A 21 D 13/00 |
| Y | DE-A-2 722 731 (K. SONDERMANN)<br>* Figures 1-3; claims 21,1 * | 1 | |
| Y | DE-A-1 782 652 (W.E.J. KOERBER)<br>* Figures 1-3; claims 1-4 * | 1 | |
| Y | FR-A- 746 877 (A. DACHSBECK)<br>* Figures 1-7; pages 1,2 * | 1 | |
| Y | US-A-2 903 365 (E.D. O'BRIAN et al.)<br>* Figures 1-7; claims 1-13 * | 1 | TECHNICAL FIELDS SEARCHED (Int. Cl.4)<br><br>A 23 G |
| A | DE-C- 449 354 (H. ROMRIG) | | |

The present search report has been drawn up for all claims

| Place of search | Date of completion of the search | Examiner |
|---|---|---|
| THE HAGUE | 03-11-1986 | GUYON R.H. |